# FASCICULE DE BREVET EUROPEEN

(11) **EP 4 562 285 B1**
(45) Date de publication et mention de la délivrance du brevet: **01.07.2026**
(21) Numéro de dépôt: 23751682.8
(22) Date de dépôt: 26.07.2023
(51) Int. Cl.: F02C 3/10, F02C 6/02, F02C 6/20, F02C 7/268, F02C 7/26, F02C 3/113

(54) **ENSEMBLE PROPULSIF AMELIORE POUR AERONEF HYBRIDE MULTI MOTEURS**
VERBESSERTE ANTRIEBSANORDNUNG FÜR EIN HYBRIDFLUGZEUG MIT MEHREREN TRIEBWERKEN
IMPROVED PROPULSION ASSEMBLY FOR MULTI-ENGINE HYBRID AIRCRAFT

(30) Priorité: 27.07.2022 FR 2207742
(43) Date de publication de la demande: 04.06.2025
(73) Titulaire: Safran Helicopter Engines, 64510 Bordes (FR)
(72) Inventeur: THIRIET, Romain, Jean, Gilbert, 77550 MOISSY-CRAMAYEL (FR); BEDRINE, Olivier, 77550 MOISSY-CRAMAYEL (FR)
(74) Mandataire: Cabinet Beau de Loménie
(86) Numéro de dépôt international: PCT/FR2023/051166
(87) Numéro de publication internationale: WO 2024/023445

(56) Documents cités:
- WO-A1-2022/101586
- WO-A1-95/02120
- FR-A1- 3 115 825
- US-A1- 2007 151 258

## Description

### Domaine Technique

La présente invention concerne le domaine des aéronefs hybridés, comprenant au moins deux moteurs tels que des turbomoteurs ou des turbopropulseurs, pour des engins volants tels des hélicoptères ou avions bimoteurs. En particulier, l'invention concerne un ensemble propulsif pour aéronef hybridé multi moteurs, notamment bimoteur, un aéronef hybridé comprenant un tel ensemble propulsif, et un procédé utilisant un tel ensemble propulsif.

### Technique antérieure

De manière connue, une turbomachine, par exemple un turbomoteur, notamment pour un hélicoptère, comporte une turbine à gaz ayant un générateur de gaz et une turbine libre entraînée en rotation par le flux de gaz généré par le générateur de gaz.

Traditionnellement, le générateur de gaz comporte au moins un compresseur et une turbine couplés en rotation. Le principe de fonctionnement est le suivant : l'air frais entrant dans la turbine à gaz est comprimé du fait de la rotation du compresseur avant d'être envoyé vers une chambre de combustion où il est mélangé à un carburant. Les gaz brûlés du fait de la combustion sont ensuite évacués à grande vitesse. Il se produit alors une première détente dans la turbine du générateur de gaz, durant laquelle cette dernière extrait l'énergie nécessaire à l'entraînement du compresseur. La turbine du générateur de gaz n'absorbe pas toute l'énergie cinétique des gaz brûlés et l'excédent d'énergie cinétique correspond au flux de gaz généré par le générateur de gaz. Ce dernier fournit donc de l'énergie cinétique à la turbine libre de sorte qu'il se produit une seconde détente dans la turbine libre qui transforme cette énergie cinétique en énergie mécanique afin d'entraîner un organe récepteur, tel le rotor de l'hélicoptère.

Certains aéronefs comportent deux turbomachines ou plus, comprenant chacune une turbine à gaz telle que décrite ci-dessus. C'est le cas notamment des hélicoptères bimoteurs ou multi moteurs. De tels aéronefs permettent un fonctionnement en mode SEO (pour « Single Engine Operative » en anglais). Le mode SEO est un mode de fonctionnement d'une architecture bimoteur dans lequel une des turbines à gaz est volontairement arrêtée, l'autre assurant l'intégralité de la fourniture de puissance. Ce mode permet d'optimiser la consommation spécifique, qui diminue avec la puissance fournie par une turbomachine. En effet, la consommation spécifique d'une turbine diminuant avec la puissance fournie, il est en effet préférable de fournir 100% de la puissance avec une turbine, plutôt que 50% par chacune d'entre elle.

Un des points critiques du mode SEO réside dans la capacité à rallumer la turbine arrêtée en cas de perte de puissance de la turbine en fonctionnement. Afin d'assurer un redémarrage le plus rapide possible, il est possible de maintenir la turbine arrêtée en mode veille (ou « super ralenti »), c'est-à-dire de continuer à faire tourner son générateur de gaz au moyen exclusif d'une machine électrique, sans apport de carburant. Le générateur étant alors maintenu dans sa « fenêtre d'allumage » (typiquement 10-30% de la vitesse de rotation nominale du générateur de gaz) afin de permettre un allumage immédiat du carburant, soit en mode « super-ralenti » au moyen d'une combustion à un seuil de vitesse faible et assisté par l'intermédiaire d'un apport de puissance mécanique via une machine électrique, afin de bénéficier d'une chambre de combustion déjà allumée mais avec une température interne maitrisée. FR 3 115 825 A1, WO 95/02120 A1, US 2007/151258 A1 et WO 2022/101586 A1 divulguent des exemples de turbomachines comprenant des machines électriques.

Les applications bimoteurs impliquent de nombreuses fonctions, telles que le démarrage du générateur de gaz, la génération d'électricité à bord, ou la fourniture de puissance mécanique au rotor principal. Les solutions existantes, permettant de réaliser certaines de ces fonctions ne sont pas entièrement satisfaisantes. En particulier, elles ne permettent pas d'apporter la redondance nécessaire à la fonction démarrage du moteur qui se trouve en mode veille, ni de limiter l'impact du prélèvement électrique sur le moteur lorsque l'hélicoptère ne fonctionne pas en mode SEO. Il existe donc un besoin pour un ensemble propulsif d'aéronef bimoteur ou multi moteurs présentant une architecture répondant au moins en partie aux inconvénients précités.

### Exposé de l'invention

Le présent exposé concerne un ensemble propulsif pour aéronef hybridé, notamment d'hélicoptère multi-moteurs, comprenant :
- au moins un premier moteur et un deuxième moteur ayant chacun un générateur de gaz et une turbine libre entraînée en rotation par un flux de gaz généré par le générateur de gaz,
- un rotor principal couplé à la turbine libre du premier et du deuxième moteur,
- le premier moteur comprenant une première machine électrique et une deuxième machine électrique de puissance inférieure à la première machine électrique, l'une de la première ou de la deuxième machine électrique étant apte à être couplée au générateur de gaz et à mettre en rotation le générateur de gaz lors d'une phase de démarrage du moteur, et étant en outre apte à être couplée à la turbine libre afin de générer de l'énergie électrique après la phase de démarrage, l'autre de la première ou de la deuxième machine électrique étant couplée au générateur de gaz uniquement.

Le rotor principal peut être couplé à la turbine libre du premier moteur et du deuxième moteur par l'intermédiaire d'un premier et d'un deuxième moyen de couplage principal respectivement. Par ailleurs, un arbre de la turbine libre de chacun du premier et du deuxième moteur peut être en prise directe avec le rotor principal, ou par l'intermédiaire d'un réducteur mécanique.

On comprend que selon le présent exposé, le premier moteur au moins est équipé d'une première machine électrique et d'une deuxième machine électrique. Dans certains modes de réalisation, le deuxième moteur comprend une troisième machine électrique, de préférence de puissance inférieure à la première machine électrique, apte à entrainer le générateur de gaz du deuxième moteur lors d'une phase de démarrage, et à être entrainée par ledit générateur de gaz afin de générer de l'énergie électrique après la phase de démarrage.

De manière alternative, le deuxième moteur pourrait être équipé de la première et de la deuxième machine électrique, et le premier moteur pourrait alors être équipé de la troisième machine électrique, ou chacun du premier et du deuxième moteur pourrait être équipé de deux machines électriques de manière symétrique.

Alors que l'une de la première ou de la deuxième machine électrique est apte à être couplée avec le générateur de gaz et/ou avec la turbine libre selon les phases de fonctionnement et l'architecture du moteur, l'autre machine électrique est couplée uniquement au générateur de gaz. La première machine électrique est en outre dimensionnée de manière à pouvoir fournir une puissance supérieure à la deuxième machine électrique, notamment pour des phases de démarrage rapide. La première machine électrique est donc de forte puissance, de l'ordre d'une ou plusieurs centaines de kilowatts, alors que la deuxième machine électrique (et la troisième machine électrique du deuxième moteur le cas échéant) est de faible puissance, de l'ordre de 10kW, telle qu'une génératrice/démarreur habituellement utilisée dans les moteurs d'aéronefs.

Selon cette configuration, l'une de la première ou de la deuxième machine électrique est apte à être couplée à la turbine libre, au moins après la phase de démarrage du turbomoteur afin de générer de l'énergie électrique. Autrement dit, en vol, la turbine libre entraîne avantageusement en rotation ladite première ou deuxième machine électrique, fonctionnant en génératrice électrique, de telle sorte que l'énergie cinétique destinée à être transformée en énergie électrique est avantageusement prélevée sur la turbine libre, et non sur le générateur de gaz. Cela permet de fournir de l'électricité en limitant l'impact sur le rendement du moteur. Il en résulte que le turbomoteur selon l'invention permet avantageusement de fournir de l'électricité sans trop pénaliser son rendement.

On notera qu'en vol, lorsque la génération électrique est réalisée par ladite première ou deuxième machine électrique entrainée par la turbine libre du premier moteur, la troisième machine électrique, le cas échéant, entrainée par le générateur de gaz du deuxième moteur, peut se trouver en redondance ou en apport de puissance électrique supplémentaire.

De plus, lors d'un fonctionnement en mode SEO, lorsque le deuxième moteur entraine seul le rotor principal, la première ou la deuxième machine électrique du premier moteur fonctionnant en mode veille peut être utilisée pour maintenir le générateur de gaz de ce moteur en rotation à faible vitesse. La première machine électrique de forte puissance peut en outre être utilisée pour un redémarrage rapide du moteur qui est en mode veille, notamment en cas d'urgence. Il est également possible d'utiliser les deux machines électriques en même temps afin d'augmenter la puissance injectée au générateur de gaz lors de la phase de réactivation rapide et donc de réduire le temps de réactivation. De plus, la première ou la deuxième machine électrique peuvent être utilisées de façon indépendante afin de réaliser un redémarrage normal, permettant ainsi une redondance.

Par conséquent, l'architecture multi moteurs selon le présent exposé présente l'avantage d'être simple en limitant le nombre de composants et de connexions. En particulier, elle permet d'améliorer la fiabilité du démarrage pour le moteur en mode veille dans le cadre du mode SEO, et d'optimiser la performance du moteur en prélevant via l'une des machines électriques sur la turbine libre après la phase de démarrage en fonctionnement bimoteur classique. Il est ainsi possible de rationaliser et d'optimiser le nombre de machines électriques et l'architecture de l'ensemble propulsif, tout en permettant de réaliser un nombre élevé de fonctions, et en diminuant la masse du dispositif.

Dans certains modes de réalisation, la première machine électrique est couplée à un arbre du générateur de gaz par l'intermédiaire de premiers moyens de couplage désactivables configurés pour être activés lors de la phase de démarrage, et pour être désactivés après la phase démarrage.

Par « moyens de couplage désactivables », on entend que les moyens de couplage peuvent être dans une position activée dans laquelle les organes reliés auxdits moyens de couplage sont couplés, ou dans une position désactivée dans laquelle lesdits organes sont découplés, étant entendu que par "organe" on entend les machines électriques, le rotor principal et le générateur de gaz.

Conformément à l'invention, la première machine électrique est de préférence réversible et fonctionne en moteur électrique lorsque les premiers moyens de couplage sont activés, de manière à entraîner en rotation le générateur de gaz lors de la phase de démarrage du moteur. Corrélativement, la première machine électrique réversible fonctionne en génératrice électrique de manière à produire de l'électricité par le prélèvement d'énergie cinétique sur la turbine libre, et ce après la phase de démarrage du moteur, c'est-à-dire essentiellement en vol. Durant cette phase post démarrage du moteur, les premiers moyens de couplage sont désactivés de telle sorte que le générateur de gaz ne peut entrainer la première machine électrique.

On comprend que selon ce mode de réalisation, la deuxième machine électrique est couplée uniquement au générateur de gaz. Cependant, on notera qu'une configuration dans laquelle la deuxième machine électrique et la première machine électrique sont inversées est également possible.

Dans certains modes de réalisation, la première machine électrique est couplée à un arbre de la turbine libre en étant en prise directe avec celui-ci.

Par « en prise direct », on comprend que la première machine électrique est couplée à l'arbre de la turbine libre par un arbre simple, ou éventuellement par l'intermédiaire de pignons, mais qu'aucun moyen de couplage désactivable (par exemple une roue libre), n'est disposé entre la première machine électrique l'arbre de la turbine libre.

En d'autres termes, alors que la première machine électrique est couplée à l'arbre du générateur de gaz par l'intermédiaire de moyens de couplage désactivables, pouvant notamment être désactivés après la phase de démarrage, la première machine électrique est couplée à l'arbre de la turbine libre en étant en prise directe avec celui-ci, de telle sorte que la machine électrique entraine également la turbine libre lors d'une phase de démarrage du moteur et est toujours liée à celle-ci. Cette architecture permet de réduire la masse totale de l'ensemble propulsif.

Dans certains modes de réalisation, la première machine électrique est couplée à un arbre de la turbine libre par l'intermédiaire de deuxièmes moyens de couplage désactivables, les premiers et deuxièmes moyens de couplage désactivables étant configurés de manière à ne pas être activés simultanément.

Lorsque les deuxièmes moyens de couplage sont activés, les premiers moyens de couplage sont désactivés, c'est-à-dire que la première machine électrique est couplée à la turbine libre tout en étant découplée du générateur de gaz, tandis qu'à l'inverse, lorsque les premiers moyens de couplage sont activés, les deuxièmes moyens de couplage sont désactivés, c'est-à-dire que la première machine électrique réversible est couplée au générateur de gaz tout en étant découplée de la turbine libre. Sans sortir du cadre de l'invention, on peut également prévoir une position intermédiaire dans laquelle les premiers et deuxièmes moyens de couplage sont désactivés en même temps.

La première machine électrique fonctionne en moteur électrique lorsque les premiers moyens de couplage sont activés, de manière à entraîner en rotation le générateur de gaz lors de la phase de démarrage du moteur. Corrélativement, la première machine électrique réversible fonctionne en génératrice électrique lorsque les deuxièmes moyens de couplage sont activés, de manière à produire de l'électricité par le prélèvement d'énergie cinétique sur la turbine libre, et ce après la phase de démarrage du moteur, c'est-à-dire essentiellement en vol. En d'autres termes, la première machine électrique n'est couplée à la turbine libre qu'après la phase de démarrage.

Grâce au fait que les premiers et seconds moyens de couplage ne peuvent être activés simultanément, on évite l'apparition de la situation non souhaitée dans laquelle la turbine libre entraîne en rotation le générateur de gaz.

Dans certains modes de réalisation, les premiers moyens de couplage désactivables comprennent une première roue libre, les deuxièmes moyens de couplage désactivables comprennent une deuxième roue libre, et les première et deuxième roues libres sont montées en opposition.

Un intérêt de la roue libre est qu'elle ne nécessite pas d'être commandée électroniquement ou mécaniquement par un opérateur extérieur. Une telle roue libre est généralement constituée d'un moyeu et d'une couronne périphérique montée rotative sur le moyeu. Le moyeu pouvant entraîner en rotation la couronne périphérique mais pas l'inverse. Aussi, le moyeu ne peut entraîner la couronne que lorsque le moyeu tourne dans un sens prédéterminé, que l'on appellera « sens d'engagement ». Dans le cas contraire, le moyeu et la couronne périphérique tournent librement l'un par rapport à l'autre. En l'espèce, les moyens de couplage désactivables sont activés lorsque le moyeu de la roue libre entraîne en rotation la couronne périphérique, et, à l'inverse, les moyens de couplage désactivables sont désactivés lorsque le moyeu de la roue libre n'entraîne pas en rotation la couronne périphérique.

Par "montées en opposition", on entend que la première roue libre peut transmettre un couple de rotation provenant de la première machine électrique, alors que la deuxième roue libre peut transmettre un couple de rotation vers la première machine électrique.

Dans certains modes de réalisation, les premiers moyens de couplage désactivables comprennent un premier réducteur ayant un premier coefficient de réduction, tandis que les deuxièmes moyens de couplage désactivables comprennent un deuxième réducteur ayant un deuxième coefficient de réduction, et le rapport des premier et deuxième coefficients de réduction est inférieur à une valeur limite.

Par réducteur, il faut entendre un ou plusieurs étages de réduction, comportant par exemple des trains d'engrenages. De tels réducteurs sont connus par ailleurs. Comme le générateur de gaz et la turbine libre tournent généralement sensiblement plus vite que la première machine électrique, le réducteur permet d'adapter la vitesse de rotation de la machine électrique aux vitesses du générateur de gaz et de la turbine libre.

De préférence, la valeur limite est choisie de manière à ce que les première et deuxième roues libres ne soient pas engagées simultanément. De préférence, cette valeur limite est proportionnelle au rapport de la vitesse nominale du générateur de gaz sur la vitesse nominale de la turbine libre.

Dans certains modes de réalisation, lorsque le deuxième moteur entraine seul le rotor principal, le générateur de gaz du premier moteur est maintenu dans un mode veille, par l'intermédiaire de la première ou de la deuxième machine électrique.

Lorsque l'aéronef fonctionne en mode SEO, le deuxième moteur, par exemple, assure l'intégralité de la fourniture de puissance, alors que le premier moteur est volontairement arrêtée, ou de préférence mise en mode veille, afin d'optimiser la consommation spécifique. Le mode veille permet de maintenir le générateur de gaz du premier moteur dans une plage de 5 à 30% de sa vitesse de rotation nominale, afin de permettre un rallumage rapide en cas de nécessité, notamment lorsque le deuxième moteur s'arrête involontairement.

On notera que lorsque la première machine électrique est en prise directe avec l'arbre de la turbine libre, et est utilisée pour maintenir le générateur de gaz du premier moteur dans le mode veille, elle entraine inévitablement la turbine libre également. Cette configuration est rendue possible par le fait que la turbine libre dudit premier moteur tourne à une vitesse plus faible que le rotor principal, le premier moyen de couplage principal étant alors désactivé.

Dans certains modes de réalisation, la deuxième machine électrique est couplée au générateur de gaz uniquement, par l'intermédiaire d'une roue libre.

Par conséquent, la deuxième machine électrique peut entrainer le générateur de gaz lors d'une phase de démarrage, mais à l'inverse, le générateur de gaz ne peut pas entrainer la deuxième machine électrique. Cette dernière reste donc au repos lorsqu'elle n'est pas utilisée. Selon cette configuration, seule la première machine électrique peut donc générer de l'énergie électrique.

Le présent exposé concerne également un aéronef hybridé comprenant un ensemble propulsif selon l'un quelconque des modes de réalisation précédents, l'aéronef hybridé étant un hélicoptère multi moteurs, notamment bimoteur.

On comprend par « aéronef hybridé », un aéronef comprenant un moteur thermique permettant d'entrainer en rotation un rotor principal, et au moins une machine électrique permettant d'apporter de la puissance au moteur thermique.

Le présent exposé concerne également un procédé d'optimisation de fonctionnement d'un aéronef multi-moteur utilisant un ensemble propulsif selon l'un quelconque des modes de réalisation précédents, dans lequel, lors d'une phase de démarrage du premier moteur, la première machine électrique et/ou la deuxième machine électrique entrainent le générateur de gaz dudit premier moteur, et après la phase de démarrage, la turbine libre dudit premier moteur entraine l'une de la première machine électrique ou de la deuxième machine électrique afin de générer de l'énergie électrique.

Dans certains modes de réalisation, le deuxième moteur est apte à fonctionner seul, le premier moteur fonctionnant alors dans un mode veille en étant entrainé au ralenti par la première ou la deuxième machine électrique, le premier moteur fonctionnant dans le mode veille étant redémarré par la première machine électrique au moins lors d'une phase de redémarrage rapide.

La puissance de la première machine électrique étant de l'ordre de plusieurs dizaines à quelques centaines de kilowatts, il est possible de démarrer le générateur de gaz beaucoup plus rapidement en utilisant la première machine électrique au moins lors d'une phase de redémarrage rapide.

Dans certains modes de réalisation, lors d'une phase de démarrage du premier moteur, la première machine électrique et/ou la deuxième machine électrique entrainent le générateur de gaz dudit premier moteur sans entrainer la turbine libre, lorsque la première machine électrique est couplée à l'arbre de la turbine libre par l'intermédiaire des deuxièmes moyens de couplage désactivables comprenant la deuxième roue libre.

Dans une configuration de démarrage normal au sol ou pour sortir du mode SEO, compte tenu de la présence des deuxièmes moyens de couplage désactivables, aucune de la première ou de la deuxième machine électrique ne peut entrainer l'arbre de la turbine libre. L'une ou l'autre des deux machines électriques, ou les deux simultanément, peuvent donc être utilisées en mode SEO pour maintenir le générateur de gaz du premier moteur en mode veille sans entrainer la turbine libre. De même, lors d'un démarrage normal au sol ou d'une réactivation normale en vol, c'est-à-dire hors situation d'urgence, l'une ou l'autre des machines électriques (ou les deux) peuvent être utilisées sans entrainer la turbine libre.

Dans certains modes de réalisation, le deuxième moteur est apte à fonctionner seul, et, lorsque la première machine électrique est couplée à l'arbre de la turbine libre du premier moteur en étant en prise directe avec celui-ci, le premier moteur fonctionnant alors dans un mode veille est entrainé au ralenti par la deuxième machine électrique couplée au générateur de gaz uniquement, ou par la première machine électrique, le rotor principal étant couplé à la turbine libre du premier moteur par l'intermédiaire d'un moyen de couplage principal, le rotor principal entrainé par le deuxième moteur tournant à une vitesse plus élevée que l'arbre de la turbine libre du premier moteur de telle sorte que le moyen de couplage principal est désactivé.

Dans cette configuration de fonctionnement en mode SEO, compte tenu de l'absence de moyens de couplage désactivables entre la première machine électrique et la turbine libre, la première machine électrique est liée en permanence à la turbine libre et entraine donc l'arbre de la turbine libre également lorsqu'elle est utilisée pour maintenir le premier moteur en mode veille au ralenti. Cette configuration est rendue possible par le fait que la turbine libre dudit premier moteur tourne à une vitesse plus faible que le rotor principal, le moyen de couplage principal étant alors désactivé. En outre, le fait d'entrainer le générateur de gaz au ralenti par la première machine électrique, en entrainant par conséquent à la fois la turbine libre et le générateur de gaz, permet de reconnecter plus rapidement l'arbre de la turbine libre au rotor principal en cas de nécessité de démarrage rapide.

De manière alternative, la deuxième machine électrique couplée au générateur de gaz uniquement peut être utilisé pour entrainer le générateur de gaz du premier moteur au ralenti, sans entrainer la turbine libre.

Par ailleurs, dans ce cas de figure également, le premier moteur fonctionnant dans le mode veille peut être redémarré par la première machine électrique au moins, lors d'une phase de redémarrage rapide.

Dans certains modes de réalisation, lorsque la première machine électrique est couplée à l'arbre de la turbine libre du premier moteur en étant en prise directe avec celui-ci, le premier moteur est démarré par celle de la première ou de la deuxième machine électrique couplée au générateur de gaz uniquement lorsque le deuxième moteur est arrêté, ou par la première et/ou la deuxième machine électrique lorsque le deuxième moteur a été préalablement démarré.

Dans le cas d'un premier démarrage au sol, le rotor principal étant arrêté, la première machine électrique en prise directe avec l'arbre de la turbine libre ne peut pas être utilisée pour entrainer le générateur de gaz et démarrer le premier moteur, l'inertie et le couple résistif du rotor principal étant en effet trop importants. Par conséquent, la deuxième machine électrique, couplée au générateur de gaz uniquement, est utilisée pour démarrer le premier moteur. En revanche, lorsque le deuxième moteur a été préalablement démarré, entrainant alors le rotor principal, la première machine électrique peut être utilisée pour démarrer le générateur de gaz du premier moteur, tout en entrainant la turbine libre. Le premier moteur démarre alors en turbines dites liées. Compte tenu de cette architecture et de la présence des deux machines électriques, il est ainsi possible d'optimiser le fonctionnement de l'aéronef multi-moteur et son démarrage en fonction des cas de figure.

### Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1] La figure 1 représente une vue en coupe d'un ensemble propulsif pour aéronef bimoteur selon un premier mode de réalisation,
[Fig. 2] La figure 2 représente un schéma fonctionnel de l'ensemble propulsif de la figure 1,
[Fig. 3] La figure 3 représente une vue en coupe d'un ensemble propulsif pour aéronef bimoteur selon un deuxième mode de réalisation,
[Fig. 4] La figure 4 représente un schéma fonctionnel de l'ensemble propulsif de la figure 3.

### Description des modes de réalisation

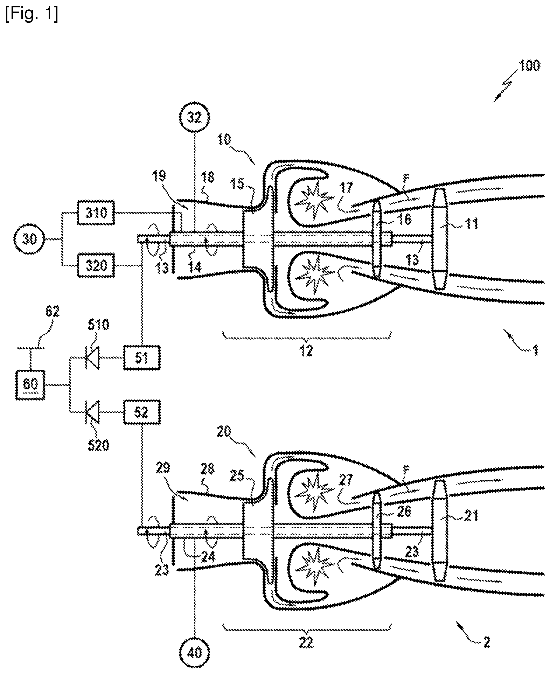

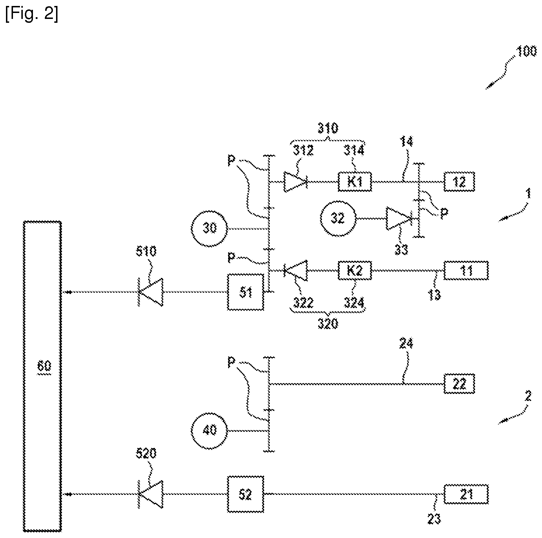

Une architecture d'un ensemble propulsif 100 selon un premier mode de réalisation de l'invention va être décrite dans la suite de la description, en référence aux figures 1 et 2.

On notera de manière générale que, par souci de clarté, les figures représentent schématiquement et de manière fonctionnelle et simplifiée une architecture du dispositif, sans représenter tous les détails des éléments constituant les turbomachines et les différents organes de transmission de puissance. En particulier, les pignons P permettant l'entrainement des arbres 13, 14 par les machines électriques, et inversement le cas échéant, sont représentés schématiquement, et les éventuels rapports de vitesse ne sont pas représentés.

La figure 1 représente de façon schématique un ensemble propulsif 100 d'un aéronef bimoteur, comprenant un premier moteur, dans cet exemple une première turbomachine 1 et un deuxième moteur, dans cet exemple une deuxième turbomachine 2, entrainant en rotation des organes de transmissions 60 d'un hélicoptère portant une hélice ou un rotor principal 62. Les turbomachines peuvent être des turbomoteurs ou des turbopropulseurs. Bien que l'ensemble propulsif décrit dans la suite de la description comprenne deux turbomachines, cet exemple n'est pas limitatif, l'invention s'appliquant également aux ensembles propulsif d'aéronefs multi moteurs comprenant plus de deux moteurs.

La première turbomachine 1 et la deuxième turbomachine 2 sont en grande partie identiques et présentent des caractéristiques communes. Aussi, la description ci-dessous fait référence à la fois à la première et à la deuxième turbomachine 1, 2 pour les caractéristiques qu'elles ont en commun.

La première turbomachine 1 et la deuxième turbomachine 2 comprennent respectivement une turbine à gaz 10, 20 ayant un générateur de gaz 12, 22 et une turbine libre 11, 21 apte à être entraînée en rotation par un flux de gaz généré par le générateur de gaz 12, 22. La turbine libre 11, 21 est montée sur un arbre 13, 23 qui transmet le mouvement de rotation à un organe récepteur tel un rotor principal 62 de l'hélicoptère par l'intermédiaire des organes de transmission 60. Selon cet exemple, la turbine à gaz 10, 20 représentée sur la figure 1 est du type à prise de mouvement avant avec renvoi par arbre coaxial. On pourrait très bien considérer, sans sortir du cadre de la présente invention, une turbine à gaz à turbine libre du type à prise de mouvement avant avec renvoi par arbre interne ou extérieur, ou bien une turbomachine à turbine libre du type à prise de mouvement arrière. De la même manière, la turbine peut être en prise directe ou intégrer un réducteur de vitesse 51, 52 sans remettre en cause le principe de l'invention.

Le générateur de gaz 12, 22 comporte un arbre rotatif 14, 24 sur lequel sont montés un compresseur 15, 25 et une turbine 16, 26, ainsi qu'une chambre de combustion 17, 27 disposée axialement entre le compresseur 15, 25 et la turbine 16, 26 dès lors que l'on considère le générateur de gaz 12, 22 selon la direction axiale de l'arbre rotatif 14, 24. La turbine à gaz 10, 20 présente un carter 18, 28 muni d'une entrée d'air 19, 29 par laquelle l'air frais entre dans le générateur de gaz 12, 22. Après son admission dans l'enceinte du générateur de gaz 12, 22, l'air frais est comprimé par le compresseur 15, 25 qui le refoule vers l'entrée de la chambre de combustion 17, 27 dans laquelle il est mélangé avec du carburant. La combustion qui a lieu dans la chambre de combustion 17, 27 provoque l'évacuation à grande vitesse des gaz brûlés vers la turbine 16, 26, ce qui a pour effet d'entraîner en rotation de l'arbre 14, 24 du générateur de gaz 12, 22 et, par conséquent, le compresseur 16, 26. La vitesse de rotation de l'arbre 14, 24 du générateur de gaz 12, 22 est déterminée par le débit de carburant entrant dans la chambre de combustion 17, 27.

Malgré l'extraction d'énergie cinétique par la turbine 16, 26, le flux de gaz sortant du générateur de gaz présente une énergie cinétique significative. Comme on le comprend à l'aide de la figure 1, le flux de gaz F est dirigé vers la turbine libre 11, 21 ce qui a pour effet de provoquer une détente dans la turbine libre 11, 21 conduisant à la mise en rotation de la roue de turbine et de l'arbre 13, 23.

Le rotor principal 62 est couplé, via les organes de transmission 60, à l'arbre 13 de la turbine libre 11 de la première turbine à gaz 10 par l'intermédiaire d'un premier moyen de couplage principal 510 disposé entre le réducteur de vitesse 51 et les organes de transmission 60. Le rotor principal 62 est également couplé, via les organes de transmission 60, à l'arbre 23 de la turbine libre 21 de la deuxième turbine à gaz 20 par l'intermédiaire d'un deuxième moyen de couplage principal 520 disposé entre le réducteur de vitesse 52 et les organes de transmission 60.

De préférence, le premier et le deuxième moyen de couplage principal 510, 520 comprend une roue libre montée de telle sorte que la rotation de l'arbre 13, 23 peut entraîner en rotation le rotor principal 62, mais qu'au contraire, la rotation du rotor principal 62 ne peut pas entraîner en rotation l'arbre 13, 23 de la turbine libre 11, 21. Autrement dit, la roue libre du premier et du deuxième moyen de couplage principal 510, 520 ne peut transférer un couple de rotation que dans le sens de la turbine libre 11, 21 vers le rotor principal 62, mais pas l'inverse. Sur un hélicoptère, cette roue libre est couramment appelée "roue libre moteur". On notera que l'utilisation d'une roue libre pour les moyens de couplage principaux 510, 520 n'est pas limitative, la roue libre pouvant être remplacée par tout système de crabot ou d'embrayage.

La turbomachine 1 comporte en outre une première machine électrique 30, de préférence réversible et comprenant un moteur électrique apte à fonctionner de manière réversible en génératrice électrique. La première machine électrique 30 est couplée mécaniquement à l'arbre 14 du générateur de gaz 12 par l'intermédiaire de premiers moyens de couplage désactivables 310.

Les premiers moyens de couplage désactivables 310 comprennent une première roue libre 312 et, de préférence, un premier réducteur d'adaptation de vitesse 314 disposé entre le générateur de gaz 12 et la première roue libre 312.

La première roue libre 312 est montée de telle sorte que la rotation de la première machine électrique 30, fonctionnant en mode moteur, peut entraîner en rotation le générateur de gaz 12, mais qu'au contraire, la rotation du générateur de gaz 12 ne peut pas entraîner la première machine électrique 30. Autrement dit, la roue libre 312 des premiers moyens de couplage désactivables 310 ne peut transférer un couple de rotation que dans le sens de la première machine électrique 30 vers le générateur de gaz 12.

La première machine électrique 30 est en outre couplée mécaniquement à l'arbre 13 de la turbine libre 11 par l'intermédiaire de deuxièmes moyens de couplage désactivables 320.

Les deuxièmes moyens de couplage désactivables 320 comprennent une deuxième roue libre 322 et, de préférence, un deuxième réducteur d'adaptation de vitesse 324 disposé entre la turbine libre 11 et la deuxième roue libre 322.

La deuxième roue libre 322 est montée de telle sorte que la rotation de la turbine libre 11 peut entraîner en rotation la première machine électrique 30 fonctionnant alors en mode génératrice, mais qu'au contraire, la rotation de la première machine électrique 30 ne peut pas entraîner la turbine libre 11. Autrement dit, la roue libre 322 des deuxièmes moyens de couplage désactivables 320 ne peut transférer un couple de rotation que dans le sens de la turbine libre 11 vers la première machine électrique 30.

Les première et deuxième roues libres 312 et 322 sont montées en opposition. En l'espèce, elles présentent des sens d'engagement opposés. Ainsi, lorsque la première machine électrique réversible 30 fonctionne en mode moteur pour entraîner en rotation l'arbre 14 du générateur de gaz 12 (première roue libre 312 engagée, i.e. premiers moyens de couplage 310 activés), la deuxième roue libre 322 ne transmet pas le couple de rotation de la première machine électrique 30 vers l'arbre 13 de la turbine libre 11 (deuxièmes moyens de couplage 320 désactivés). Inversement, lorsque l'arbre 13 de la turbine libre 11 entraîne en rotation la première machine électrique 30 fonctionnant en génératrice électrique (deuxième roue libre 322 engagée, i.e. deuxièmes moyens de couplage 320 activés), la première roue libre 312 ne transmet pas le couple de rotation de la première machine électrique 30 vers l'arbre 14 du générateur de gaz 12 (premiers moyens de couplage 310 désactivés).

Le premier réducteur d'adaptation de vitesse 314 a un premier coefficient de réduction K1 de préférence choisi de telle manière que la vitesse de la première machine électrique 30 soit adaptée à la plage de vitesse requise pour le démarrage du générateur de gaz 12. Le deuxième réducteur d'adaptation de vitesse 324 a un deuxième coefficient de réduction K2 de préférence choisi de manière que la vitesse de la première machine électrique 30 soit adaptée à la plage de vitesse requise pour permettre la fourniture d'électricité.

Pour éviter que la turbine libre 11 n'entraîne en rotation l'arbre 14 du générateur de gaz 12, il faut que la première roue libre 312 ne soit pas engagée. Pour ce faire, les coefficients de réduction K1, K2 du premier réducteur 314 et du deuxième réducteur 324 sont choisis de manière appropriée. Par exemple, mais non nécessairement, les coefficients de réduction K1, K2 suivent les rapports décrits dans le document FR2929324.

La turbomachine 1 comprend également une deuxième machine électrique 32 couplée mécaniquement à l'arbre 14 du générateur de gaz 12 uniquement, de préférence par l'intermédiaire d'une troisième roue libre 33 permettant à la deuxième machine électrique 32 de ne pas être entrainée par le générateur de gaz lorsqu'elle n'est pas utilisée.

Dans cet exemple, alors que la première machine électrique 30 est une machine électrique de forte puissance, notamment de plusieurs centaines de kilowatts, la deuxième machine électrique 32 peut être un démarreur habituellement utilisé, d'une puissance de l'ordre de 10kW. On notera cependant que cette configuration n'est pas limitative, les première et deuxième machines électriques pouvant être inversées sans sortir du cadre de l'invention.

En outre, La turbomachine 2 peut être équipée d'une troisième machine électrique 40, de préférence également de plus faible puissance que la première machine électrique 30, par exemple un démarreur équivalent à la deuxième machine électrique 32. La troisième machine électrique 40 est couplée uniquement au générateur de gaz 22, et est apte à entrainer le générateur de gaz 22 lors d'une phase de démarrage, et à être entrainée par ledit générateur de gaz 22 après la phase de démarrage afin de générer de l'énergie électrique.

Cette architecture de l'ensemble propulsif 100 permet différents modes de fonctionnement décrits dans la suite de la description, et permet d'optimiser le fonctionnement de l'ensemble propulsif 100.

La présence des deux turbomachines 1, 2 permet un fonctionnement en mode SEO (pour « Single Engine Operative » en anglais), dans lequel seule la deuxième turbomachine 2 est en fonctionnement, assurant l'intégralité de la fourniture de puissance au rotor principal 62, la première turbomachine 1 étant volontairement arrêtée. Lorsque le mode SEO est engagé, le générateur de gaz 12 est mis en veille (ou en super-ralenti assisté), c'est-à-dire qu'il ne fournit plus de puissance. En revanche, pour être démarré le plus vite possible, le générateur de gaz 12 est entrainé dans la fenêtre d'allumage (dans une plage de 5 à 30% de sa vitesse de rotation nominale) par la première machine électrique 30 ou par la deuxième machine électrique 32.

A partir de ce fonctionnement en mode SEO, il est possible de redémarrer la première turbomachine 1 dans le cadre d'un redémarrage normal, c'est-à-dire hors situation d'urgence nécessitant un redémarrage rapide, en optimisant le fonctionnement de l'aéronef. Un tel procédé d'optimisation comprend dans un premier temps, lors de la phase de démarrage de la première turbomachine 1, le fait d'entrainer le générateur de gaz 12 par la première machine électrique 30 et/ou la deuxième machine électrique 32, sans entrainer la turbine libre 11. En effet, compte tenu de la présence de la deuxième roue libre 322, montée en opposition avec la première roue libre 312, la première machine électrique 30 ne peut entrainer la turbine libre 11 en rotation. Par ailleurs, la deuxième machine électrique 32 est couplée au générateur de gaz 12 uniquement, et ne peut donc pas entrainer la turbine libre 11.

La première et la deuxième machine électrique 30, 32 peuvent être pilotées par une unité de contrôle (non représentée). Ainsi, la première et/ou la deuxième machine électrique 30, 32 entraînent le générateur de gaz 12 par l'intermédiaire des roues libres 312, 33 respectivement, permettant le démarrage du générateur de gaz 12. Lors du démarrage du générateur de gaz 12, les gaz chauds entrainent la turbine libre 11, cette dernière étant reliée au rotor principal 62 via la première roue-libre 312, le réducteur de vitesse 51 et la roue libre du premier moyen de couplage principal 510.

Dans un deuxième temps, après la phase de démarrage, la turbine libre 11 entraine la première machine électrique 30 par l'intermédiaire de la deuxième roue libre 322 afin de générer de l'énergie électrique. La première machine électrique 30 peut être reliée électriquement à un réseau électrique de l'ensemble propulsif 100 afin d'alimenter différents équipements électriques (non représentés). On notera que les étapes ci-dessus s'appliquent également à un démarrage normal (et non un redémarrage depuis le mode SEO) de la turbomachine 1, et hors situation d'urgence.

En outre, après la phase de démarrage et lorsque les deux générateurs de gaz 12, 22 sont en fonctionnement (par exemple après le rallumage de la turbomachine 1 pour sortir du mode SEO), la troisième machine électrique 40 peut générer de l'énergie électrique en redondance avec la première machine électrique 30.

On notera que dans l'exemple illustré sur la figure 2, compte tenu de la présence de la troisième roue libre 33, la deuxième machine électrique 32 ne peut pas être entrainée pour fonctionner en mode génératrice, et par conséquent seule la première machine électrique 30 peut générer de l'énergie électrique. Cependant, en l'absence de la troisième roue libre 33, les première 30 et deuxième 32 machines électriques générer chacune de l'énergie électrique mutuellement sans sortir du cadre de l'invention.

Par ailleurs, il est également possible d'effectuer un redémarrage rapide de la première turbomachine 1 depuis le mode veille. Ce redémarrage rapide est identique à l'étape de démarrage ou de redémarrage décrite plus haut, mais la première machine électrique 30 de forte puissance est nécessairement utilisée dans ce cas de figure, seule ou éventuellement complétée par la deuxième machine électrique 32 afin d'optimiser le temps de réactivation. En effet, la puissance de la première machine électrique 30 étant de l'ordre de plusieurs dizaines à quelques centaines de kilowatts, il est possible de démarrer le générateur de gaz 12 beaucoup plus rapidement qu'avec un démarreur d'une puissance de l'ordre de 10kW, habituellement utilisé. Cela procure notamment un avantage opérationnel dans le cas de missions de type secours médical, ou lors des tentatives de redémarrage rapide en vol.

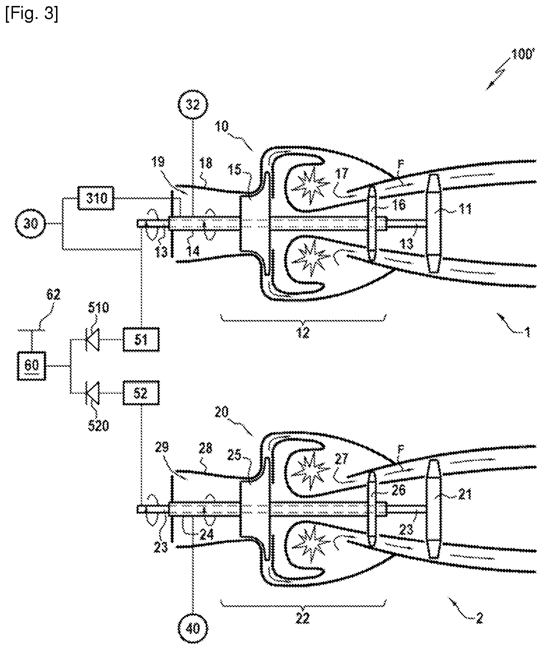

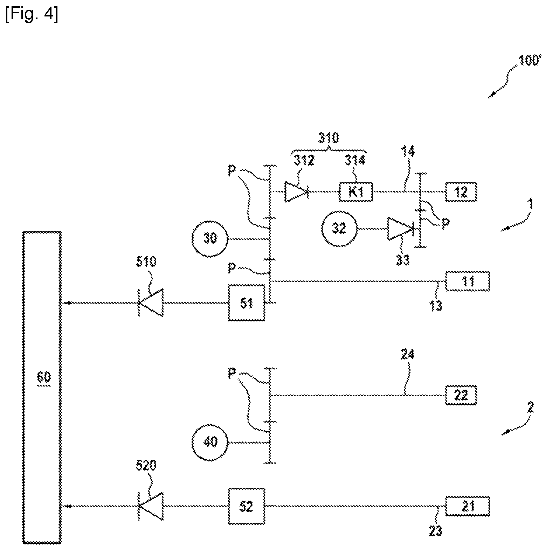

Une architecture d'un ensemble propulsif 100' selon un deuxième mode de réalisation de l'invention va être décrite dans la suite de la description, en référence aux figures 3 et 4.

Les caractéristiques de l'ensemble propulsif 100' selon ce deuxième mode de réalisation sont en grande partie identiques à l'ensemble propulsif 100 selon le premier mode de réalisation, et ne seront pas répétées. Les modes de fonctionnement décrits plus haut en référence au premier mode de réalisation sont également applicables au deuxième mode de réalisation.

L'ensemble propulsif 100' selon le deuxième mode de réalisation diffère toutefois de l'ensemble propulsif 100 selon le premier mode de réalisation en ce qu'il ne comprend pas de deuxièmes moyens de couplage désactivables. En d'autres termes, la première machine électrique 30 est en prise directe avec l'arbre 13 de la turbine libre 11, et est donc liée en permanence à celle-ci, y compris lors des phases de démarrage.

Compte tenu de cette architecture, lors d'un fonctionnement en mode SEO, le générateur de gaz 12 de la turbomachine 1 peut être maintenu au ralenti par la deuxième machine électrique 32 de manière à ne pas entrainer la turbine libre 11, ou par la première machine électrique 30. Dans ce deuxième cas, l'arbre 13 de la turbine libre 11 est également entrainé. Toutefois, le rotor principal 62 est entrainé par la turbomachine 2 et tourne à une vitesse plus élevée que l'arbre 13 de la turbine libre 11, de telle sorte que le moyen de couplage principal, et notamment la roue libre 510, est désactivée.

De la même façon, lors d'un premier démarrage au sol, il est possible de démarrer le générateur de gaz 12 en utilisant la première machine électrique 30, si la turbomachine 2 a été préalablement allumée et entraine déjà le rotor principal 62. En revanche, si la turbomachine 2 n'a pas encore été démarrée, le générateur de gaz 12 de la turbomachine 1 est démarré en utilisant la deuxième machine électrique 32 qui est couplée au générateur de gaz 12 uniquement.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Ensemble propulsif (100) pour aéronef hybridé, notamment d'hélicoptère multi-moteurs, comprenant :
- au moins un premier moteur (1) et un deuxième moteur (2) ayant chacun un générateur de gaz (12, 22) et une turbine libre (11, 21) entraînée en rotation par un flux de gaz généré par le générateur de gaz,
- un rotor principal (62) couplé à la turbine libre (11, 21) du premier et du deuxième moteur (1, 2),
- **caractérisé en ce que** le premier moteur (1) comprend une première machine électrique (30) et une deuxième machine électrique (32) de puissance inférieure à la première machine électrique (30), l'une de la première ou de la deuxième machine électrique (30, 32) étant apte à être couplée au générateur de gaz (12) et à mettre en rotation le générateur de gaz lors d'une phase de démarrage du moteur, et étant en outre apte à être couplée à la turbine libre (11) afin de générer de l'énergie électrique après la phase de démarrage, l'autre de la première ou de la deuxième machine électrique étant couplée au générateur de gaz (12) uniquement.

2. Ensemble propulsif (100) selon la revendication 1, dans lequel la première machine électrique (30) est couplée à un arbre (14) du générateur de gaz (12) par l'intermédiaire de premiers moyens de couplage désactivables (310) configurés pour être activés lors de la phase de démarrage, et pour être désactivés après la phase démarrage.

3. Ensemble propulsif (100) selon la revendication 2, dans lequel la première machine électrique (30) est couplée à un arbre (13) de la turbine libre (11) en étant en prise directe avec celui-ci.

4. Ensemble propulsif (100) selon la revendication 2, dans lequel la première machine électrique (30) est couplée à un arbre (13) de la turbine libre (11) par l'intermédiaire de deuxièmes moyens de couplage désactivables (320), les premiers et deuxièmes moyens de couplage désactivables étant configurés de manière à ne pas être activés simultanément.

5. Ensemble propulsif (100) selon la revendication 4, dans lequel les premiers moyens de couplage désactivables (310) comprennent une première roue libre (312), les deuxièmes moyens de couplage désactivables (320) comprennent une deuxième roue libre (322), et les première et deuxième roues libres sont montées en opposition.

6. Ensemble propulsif (100) selon la revendication 4 ou 5, dans lequel les premiers moyens de couplage désactivables (310) comprennent un premier réducteur (314) ayant un premier coefficient de réduction (K1), tandis que les deuxièmes moyens de couplage désactivables (320) comprennent un deuxième réducteur (324) ayant un deuxième coefficient de réduction (K2), et le rapport des premier et deuxième coefficients de réduction (K1, K2) est inférieur à une valeur limite.

7. Ensemble propulsif (100) selon l'une quelconque des revendications 1 à 6, dans lequel, lorsque le deuxième moteur (2) entraine seul le rotor principal (62), le générateur de gaz (12) du premier moteur (1) est maintenu dans un mode veille, par l'intermédiaire de la première ou de la deuxième machine électrique (30, 32).

8. Ensemble propulsif (100) selon l'une quelconque des revendications 1 à 7, dans lequel la deuxième machine électrique (32) est couplée au générateur de gaz (12) uniquement, par l'intermédiaire d'une roue libre (33).

9. Ensemble propulsif (100) selon l'une quelconque des revendications 1 à 8, dans lequel le deuxième moteur (2) comprend une troisième machine électrique (40) apte à entrainer le générateur de gaz (22) du deuxième moteur (2) lors d'une phase de démarrage, et à être entrainée par ledit générateur de gaz (22) après la phase de démarrage afin de générer de l'énergie électrique.

10. Aéronef hybridé comprenant un ensemble propulsif (100) selon l'une quelconque des revendications précédentes, l'aéronef hybridé étant un hélicoptère multi moteurs, notamment bimoteur.

11. Procédé d'optimisation de fonctionnement d'un aéronef multi-moteur utilisant un ensemble propulsif (100) selon l'une quelconque des revendications 1 à 9, dans lequel, lors d'une phase de démarrage du premier moteur (1), la première machine électrique (30) et/ou la deuxième machine électrique (32) entrainent le générateur de gaz (12) dudit premier moteur (1), et après la phase de démarrage, la turbine libre (11) dudit premier moteur (1) entraine l'une de la première machine électrique (30) ou de la deuxième machine électrique (32) afin de générer de l'énergie électrique.

12. Procédé selon la revendication 11, dans lequel le deuxième moteur (2) est apte à fonctionner seul, le premier moteur (1) fonctionnant alors dans un mode veille en étant entrainé au ralenti par la première ou la deuxième machine électrique (30, 32), le premier moteur (1) fonctionnant dans le mode veille étant redémarré par la première machine électrique (30) au moins lors d'une phase de redémarrage rapide.

13. Procédé selon la revendication 11, dans lequel, lors d'une phase de démarrage du premier moteur (1), la première machine électrique (30) et/ou la deuxième machine électrique (32) entrainent le générateur de gaz (12) dudit premier moteur (1) sans entrainer la turbine libre (11), lorsque la première machine électrique (30) est couplée à l'arbre (13) de la turbine libre (11) par l'intermédiaire des deuxièmes moyens de couplage désactivables (320) comprenant la deuxième roue libre (322).

14. Procédé selon la revendication 11, dans lequel le deuxième moteur (2) est apte à fonctionner seul, et dans lequel, lorsque la première machine électrique (30) est couplée à l'arbre (13) de la turbine libre (11) du premier moteur (1) en étant en prise directe avec celui-ci, le premier moteur (1) fonctionnant alors dans un mode veille est entrainé au ralenti par la deuxième machine électrique (30, 32) couplée au générateur de gaz (12) uniquement, ou par la première machine électrique (30), le rotor principal (62) étant couplé à la turbine libre (11) du premier moteur (1) par l'intermédiaire d'un moyen de couplage principal (510), le rotor principal (62) entrainé par le deuxième moteur (2) tournant à une vitesse plus élevée que l'arbre (13) de la turbine libre (11) du premier moteur (1) de telle sorte que le moyen de couplage principal (510) est désactivé.

15. Procédé selon la revendication 11, dans lequel, lorsque la première machine électrique (30) est couplée à l'arbre (13) de la turbine libre (11) du premier moteur (1) en étant en prise directe avec celui-ci, le premier moteur (1) est démarré par celle de la première ou de la deuxième machine électrique (30, 32) couplée au générateur de gaz (12) uniquement lorsque le deuxième moteur (2) est arrêté, ou par la première et/ou la deuxième machine électrique (30, 32) lorsque le deuxième moteur (2) a été préalablement démarré.

## Patentansprüche

1. Antriebseinheit (100) für ein Hybrid-Luftfahrzeug, insbesondere einen mehrmotorigen Helikopter, umfassend:
- zumindest einen ersten Motor (1) und einen zweiten Motor (2), die jeweils einen Gasgenerator (12, 22) und eine freie Turbine (11, 21) aufweisen, die durch einen Gasstrom in Drehung versetzt wird, der von dem Gasgenerator erzeugt wird,
- einen Hauptrotor (62), der mit der freien Turbine (11, 21) des ersten und des zweiten Motors (1, 2) gekoppelt ist,
- **dadurch gekennzeichnet, dass** der erste Motor (1) eine erste elektrische Maschine (30) und eine zweite elektrische Maschine (32) umfasst, welche eine geringere Leistung aufweist als die erste elektrische Maschine (30), wobei eine von der ersten oder der zweiten elektrischen Maschine (30, 32) dazu geeignet ist, während einer Startphase des Motors mit dem Gasgenerator (12) gekoppelt zu werden und den Gasgenerator in Drehung zu versetzen, und ferner dazu geeignet ist, nach der Startphase mit der freien Turbine (11) gekoppelt zu werden, um elektrische Energie zu erzeugen, wobei die andere von der ersten oder der zweiten elektrischen Maschine nur mit dem Gasgenerator (12) gekoppelt ist.

2. Antriebseinheit (100) nach Anspruch 1, wobei die erste elektrische Maschine (30) mittels erster deaktivierbarer Kopplungsmittel (310), die dazu ausgestaltet sind, während der Startphase aktiviert zu werden und nach der Startphase deaktiviert zu werden, mit einer Welle (14) des Gasgenerators (12) gekoppelt ist.

3. Antriebseinheit (100) nach Anspruch 2, wobei die erste elektrische Maschine (30) mit einer Welle (13) der freien Turbine (11) gekoppelt ist, indem sie direkt mit dieser in Eingriff steht.

4. Antriebseinheit (100) nach Anspruch 2, wobei die erste elektrische Maschine (30) mittels zweiter deaktivierbarer Kopplungsmittel (320) mit einer Welle (13) der freien Turbine (11) gekoppelt ist, wobei die ersten und zweiten deaktivierbaren Kopplungsmittel auf eine Weise ausgestaltet sind, dass sie nicht gleichzeitig aktiviert werden.

5. Antriebseinheit (100) nach Anspruch 4, wobei die ersten deaktivierbaren Kopplungsmittel (310) ein erstes Freilaufrad (312) umfassen, die zweiten deaktivierbaren Kopplungsmittel (320) ein zweites Freilaufrad (322) umfassen, und das erste und das zweite Freilaufrad einander entgegengesetzt montiert sind.

6. Antriebseinheit (100) nach Anspruch 4 oder 5, wobei die ersten deaktivierbaren Kopplungsmittel (310) ein erstes Getriebe (314) umfassen, das einen ersten Getriebekoeffizienten (K1) aufweist, während die zweiten deaktivierbaren Kopplungsmittel (320) ein zweites Getriebe (324) umfassen, das einen zweiten Getriebekoeffizienten (K2) aufweist, und das Verhältnis des ersten und des zweiten Getriebekoeffizienten (K1, K2) kleiner als ein erster Grenzwert ist.

7. Antriebseinheit (100) nach einem der Ansprüche 1 bis 6, wobei, wenn der zweite Motor (2) alleine den Hauptrotor (62) antreibt, der Gasgenerator (12) des ersten Motors (1) mittels der ersten oder der zweiten elektrischen Maschine (30, 32) in einem Bereitschaftsmodus gehalten wird.

8. Antriebseinheit (100) nach einem der Ansprüche 1 bis 7, wobei die zweite elektrische Maschine (32) mittels eines Freilaufrads (33) nur mit dem Gasgenerator (12) gekoppelt ist.

9. Antriebseinheit (100) nach einem der Ansprüche 1 bis 8, wobei der zweite Motor (2) eine dritte elektrische Maschine (40) umfasst, die dazu geeignet ist, während einer Startphase den Gasgenerator (22) des zweiten Motors (2) anzutreiben und nach der Startphase von dem Gasgenerator (22) angetrieben zu werden, um elektrische Energie zu erzeugen.

10. Hybrid-Luftfahrzeug, umfassend eine Antriebseinheit (100) nach einem der vorhergehenden Ansprüche, wobei das Hybrid-Luftfahrzeug ein mehrmotoriger, insbesondere zweimotoriger Helikopter ist.

11. Verfahren zur Optimierung des Betriebs eines mehrmotorigen Luftfahrzeugs, das eine Antriebseinheit (100) nach einem der Ansprüche 1 bis 9 verwendet, wobei während einer Startphase des ersten Motors (1) die erste elektrische Maschine (30) und/oder die zweite elektrische Maschine (32) den Gasgenerator (12) des ersten Motors (1) antreiben, und nach der Startphase die freie Turbine (11) des ersten Motors (1) eine von der ersten elektrischen Maschine (30) oder der zweiten elektrischen Maschine (32) antreibt, um elektrische Energie zu erzeugen.

12. Verfahren nach Anspruch 11, wobei der zweite Motor (2) dazu geeignet ist, alleine betrieben zu werden, wobei der erste Motor (1) dann in einem Bereitschaftsmodus betrieben wird, indem er durch die erste oder die zweite elektrische Maschine (30, 32) im Leerlauf angetrieben wird, wobei der erste Motor (1), der in dem Bereitschaftsmodus betrieben wird, zumindest während einer Schnellstartphase durch die erste elektrische Maschine (30) wieder gestartet wird.

13. Verfahren nach Anspruch 11, wobei während einer Startphase des ersten Motors (1) die erste elektrische Maschine (30) und/oder die zweite elektrische Maschine (32) den Gasgenerator (12) des ersten Motors (1) antreiben, ohne die freie Turbine (11) anzutreiben, wenn die erste elektrische Maschine (30) mittels der zweiten deaktivierbaren Kopplungsmittel (320), die das zweite Freilaufrad (322) umfassen, mit der Welle (13) der freien Turbine (11) gekoppelt ist.

14. Verfahren nach Anspruch 11, wobei der zweite Motor (2) dazu geeignet ist, alleine betrieben zu werden, und wobei, wenn die erste elektrische Maschine (30) mit der Welle (13) der freien Turbine (11) des ersten Motors (1) gekoppelt ist, indem sie direkt mit dieser in Eingriff steht, der erste Motor (1), der dann in einem Bereitschaftsmodus betrieben wird, im Leerlauf durch die zweite elektrische Maschine (30, 32), die nur mit dem Gasgenerator (12) gekoppelt ist, oder durch die erste elektrische Maschine (30) angetrieben wird, wobei der Hauptrotor (62) mit der freien Turbine (11) des ersten Motors (1) mittels eines Hauptkopplungsmittels (510) gekoppelt ist, wobei der Hauptrotor (62), der durch den zweiten Motor (2) angetrieben wird, sich mit einer höheren Drehzahl dreht als die Welle (13) der freien Turbine (11) des ersten Motors (1), auf solche Weise, dass das Hauptkopplungsmittel (510) deaktiviert ist.

15. Verfahren nach Anspruch 11, wobei, wenn die erste elektrische Maschine (30) mit der Welle (13) der freien Turbine (11) des ersten Motors (1) gekoppelt ist, indem sie direkt mit dieser in Eingriff steht, der erste Motor (1) durch jene von der ersten oder der zweiten elektrischen Maschine (30, 32) wieder gestartet wird, die nur mit dem Gasgenerator (12) gekoppelt ist, wenn der zweite Motor (2) gestoppt ist, oder durch die erste und/oder die zweite elektrische Maschine (30, 32), wenn der zweite Motor (2) vorher gestartet wurde.

## Claims

1. A propulsion assembly (100) for a hybrid aircraft, in particular a multi-engine helicopter, comprising:
- at least a first engine (1) and a second engine (2) each having a gas generator (12, 22) and a free turbine (11, 21) driven in rotation by a gas stream generated by the gas generator,
- a main rotor (62) coupled to the free turbine (11, 21) of the first and second engines (1, 2),
- **characterized in that** the first engine (1) comprises a first electric machine (30) and a second electric machine (32) of lower power than the first electric machine (30), one of the first or of the second electric machine (30, 32) being able to be coupled to the gas generator (12) and to set the gas generator in rotation during a start phase of the engine, and being further able to be coupled to the free turbine (11) in order to generate electrical energy after the start phase, the other of the first or of the second electric machine being coupled to the gas generator (12) only.

2. The propulsion assembly (100) according to claim 1, wherein the first electric machine (30) is coupled to a shaft (14) of the gas generator (12) via first deactivatable coupling means (310) configured to be activated during the start phase, and to be deactivated after the start phase.

3. The propulsion assembly (100) according to claim 2, wherein the first electric machine (30) is coupled to a shaft (13) of the free turbine (11) by being in direct engagement therewith.

4. The propulsion assembly (100) according to claim 2, wherein the first electric machine (30) is coupled to a shaft (13) of the free turbine (11) via second deactivatable coupling means (320), the first and second deactivatable coupling means being configured so as not to be activated simultaneously.

5. The propulsion assembly (100) according to claim 4, wherein the first deactivatable coupling means (310) comprise a first free wheel (312), the second deactivatable coupling means (320) comprise a second free wheel (322), and the first and second free wheels are mounted in opposition.

6. The propulsion assembly (100) according to claim 4 or 5, wherein the first deactivatable coupling means (310) comprise a first reduction gear (314) having a first reduction coefficient (K1), while the second deactivatable coupling means (320) comprise a second reduction gear (324) having a second reduction coefficient (K2), and the ratio of the first and second reduction coefficients (K1, K2) is smaller than a limit value.

7. The propulsion assembly (100) according to any one of claims 1 to 6, wherein, when the second engine (2) alone drives the main rotor (62), the gas generator (12) of the first engine (1) is kept in a standby mode, via the first or the second electric machine (30, 32).

8. The propulsion assembly (100) according to any one of claims 1 to 7, wherein the second electric machine (32) is coupled to the gas generator (12) only, via a free wheel (33).

9. The propulsion assembly (100) according to any one of claims 1 to 8, wherein the second engine (2) comprises a third electric machine (40) able to drive the gas generator (22) of the second engine (2) during a start phase, and to be driven by said gas generator (22) after the start phase in order to generate electrical energy.

10. A hybrid aircraft comprising a propulsion assembly (100) according to any one of the preceding claims, the hybrid aircraft being a multi-engine helicopter, in particular a twin-engine helicopter.

11. A method for optimizing the operation of a multi-engine aircraft using a propulsion assembly (100) according to any one of claims 1 to 9, wherein, during a start phase of the first engine (1), the first electric machine (30) and/or the second electric machine (32) drive the gas generator (12) of said first engine (1), and after the start phase, the free turbine (11) of said first engine (1) drives one of the first electric machine (30) or of the second electric machine (32) in order to generate electrical energy.

12. The method according to claim 11, wherein the second engine (2) is able to operate alone, the first engine (1) then operating in a standby mode by being driven at idle by the first or the second electric machine (30, 32), the first engine (1) operating in the standby mode being restarted by the first electric machine (30) at least during a quick restart phase.

13. The method according to claim 11, wherein, during a start phase of the first engine (1), the first electric machine (30) and/or the second electric machine (32) drive the gas generator (12) of said first engine (1) without driving the free turbine (11), when the first electric machine (30) is coupled to the shaft (13) of the free turbine (11) via the second deactivatable coupling means (320) comprising the second free wheel (322).

14. The method according to claim 11, wherein the second engine (2) is able to operate alone, and wherein, when the first electric machine (30) is coupled to the shaft (13) of the free turbine (11) of the first engine (1) by being in direct engagement therewith, the first engine (1) then operating in a standby mode is driven at idle by the second electric machine (30, 32) coupled to the gas generator (12) only, or by the first electric machine (30), the main rotor (62) being coupled to the free turbine (11) of the first engine (1) via a main coupling means (510), the main rotor (62) driven by the second engine (2) rotating at a higher speed than the shaft (13) of the free turbine (11) of the first engine (1) such that the main coupling means (510) is deactivated.

15. The method according to claim 11, wherein, when the first electric machine (30) is coupled to the shaft (13) of the free turbine (11) of the first engine (1) by being in direct engagement therewith, the first engine (1) is started by that of the first or of the second electric machine (30, 32) coupled to the gas generator (12) only when the second engine (2) is stopped, or by the first and/or the second electric machine (30, 32) when the second engine (2) has been previously started.
